# EUROPEAN PATENT SPECIFICATION

(11) **EP 3 957 554 B1**
(45) Date of publication and mention of the grant of the patent: **14.12.2022**
(21) Application number: 20191939.6
(22) Date of filing: 20.08.2020
(51) Int. Cl.: B62J 6/028, F21S 41/265, F21S 41/148, B60Q 1/04, B60Q 1/14

(54) **BICYCLE HEADLAMP**
FAHRRADSCHEINWERFER
PHARE DE BICYCLETTE

(43) Date of publication of application: 23.02.2022
(73) Proprietor: HERRMANS BIKE COMPONENTS LTD, 68600 Jakobstad (FI)
(72) Inventor: MÜLLER, Jürgen Gerhard, 14163 Berlin (DE); PORTHIN, Tomas, 68600 Jakobstad (FI)
(74) Representative: Berggren Oy

(56) References cited:
- EP-A1- 3 210 867
- DE-A1-102014 111 660
- US-A1- 2020 182 430

## Description

### Technical field

The present invention relates to a bicycle headlamp, comprising a housing having a front opening, a lens covering the front opening, said lens having a vertical direction, a lateral direction, a first surface facing inside the housing and an opposite second surface, a first light source for emitting first light beams and a first reflector for reflecting said first light beams towards said lens.

### Background

The purpose of a bicycle headlamp is to light up the road surface in front of the bicycle and at the same time to make the bicycle visible to other traffic. Bicycle headlamps are typically equipped with a light source, a reflector and a lens. The light source produces light beams, which are reflected from the reflector through the lens to form a light pattern in front of the bicycle. An example of a known bicycle headlamp is disclosed in document EP 3210867 A1, which discloses all the features of the preamble of independent claim 1.

A problem relating to the known bicycle headlamps is that, that the light patter of the headlamp does not illuminate the immediate front area of the bicycle, i.e. the near field illumination is weak. This problem emphasizes especially when the headlamp is attached to the bicycle far from the ground level for example to the bicycle handlebar. The problem cannot be corrected by directing the headlamp more sharply towards the ground since this would adversely affect to the far field illumination of the headlamp.

One attempt to achieve adequate near field and far field illumination for the headlamp is to use separate light sources for creating near field light pattern and far field light pattern and place these light sources inside the headlamp housing at different distances from the lens. A drawback of this solution is, that since both light sources use the same reflector, the reflector must be designed as a compromise of near field illumination and far field illumination requirements. An example of a vehicle headlamp comprising more than one light source using same reflector is disclosed in DE 102015009096 A1.

Another attempt to achieve adequate near field and far field illumination for the headlamp is to make completely different optical units for the near field light pattern and far field light pattern, i.e. to install two lamps inside same housing. This leads to a bulky design and increased manufacturing costs.

### Summary

An object of the invention is to provide a bicycle headlamp with which the drawbacks relating to the prior art headlamps are diminished.

The object is achieved with a bicycle headlamp defined in the independent claim 1. Some preferred embodiments of the invention are disclosed in the dependent claims.

The bicycle headlamp according to the invention comprises a housing having a front opening, a lens covering the front opening , said lens having a vertical direction, a lateral direction, a first surface facing inside the housing and an opposite second surface, a first light source for emitting first light beams and a first reflector for reflecting said first light beams towards said lens. The lens has an upper part and a lower part, the second surface of the upper part is outwards curved and the second surface of the lower part has an outwards curved upper portion and an inwards curved lower portion seen in the vertical direction of the lens.

In a first preferred embodiment of the headlamp according to the invention the second surface of the upper portion and the lower portion of the lower part of the lens is outwards curved in the lateral direction of the lens and the radius of lateral curvature of the second surface in the upper portion is smaller than the radius of lateral curvature of the second surface in the lower portion of the lens.

In a second preferred embodiment of the headlamp according to the invention said first light source has a first main radiation direction, which is substantially parallel with the vertical direction of the lens.

In yet another preferred embodiment of the headlamp according to the invention said first reflector is arranged to reflect said first light beams through said lower part of the lens. Light beams emitted by the first light source and reflected from the first reflector through the lower part of the lens form a low beam for illuminating the near- and middle- distance regions of the ground surface in front of the bicycle.

In yet another preferred embodiment of the headlamp according to the invention the first surface of the lens is flat.

In yet another preferred embodiment of the headlamp according to the invention said first reflector has a first reflecting focal point and the first light source is positioned substantially in the first reflecting focal point.

Another preferred embodiment of the headlamp according to the invention further comprises a second light source for emitting second light beams and a second reflector for reflecting said second light beams towards said lens. Preferably, said second light source has a second main radiation direction and the first main radiation direction of the first light source and the second main radiation direction point to opposite directions.

In yet another preferred embodiment of the headlamp according to the invention said second reflector is arranged to reflect said second light beams through said upper part of the lens.

In yet another preferred embodiment of the headlamp according to the invention said second reflector has a second reflecting focal point and the second light source is positioned substantially in the second reflecting focal point. Light beams emitted by the second light source and reflected from the second reflector through the upper part of the lens form a high beam for illuminating far-distance regions in front of the bicycle.

In yet another preferred embodiment of the headlamp according to the invention at least a portion of the first reflector and/or of the second reflector has a shape of a partial spheroid or paraboloid.

An another preferred embodiment of the headlamp according to the invention further comprises a carrier for supporting the first and second light sources, the first light source and the first reflector being on the first side of the carrier and the second light source and the second reflector being on the second side of the carrier. Preferably the distance between the first light source and the first surface of the lens is bigger than the distance between the second light source and the first surface of the lens.

Another preferred embodiment of the headlamp according to the invention further comprises a switch for opening and closing the power supply to the first light source and to the second light source.

An advantage of the invention is that it improves the illumination properties of the headlamp especially in the near field area close the headlamp.

A further advantage of an embodiment of the invention is that it provides two separate light beams in a compact form; low beam for near- and middle-distance illumination and high beam for far-distance illumination.

Various embodiments will become apparent from the detailed description given hereafter. However, it should be understood that the detailed description and specific examples, while indicating preferred embodiments of the invention, are given by way of illustration only, and various changes and modifications of the invention will become apparent to those skilled in the art.

### Brief description of the drawings

In the following the invention will be described in detail. In the description, reference is made to the enclosed drawings, in which
Fig. 1a is a vertical cross-sectional view of one exemplary embodiment of a bicycle headlamp according to the invention,
Fig. 1b is a horizontal cross-sectional view of the embodiment of the bicycle headlamp depicted in fig 1a,
Fig. 2a shows a lens of the embodiment of a bicycle headlamp depicted in figs 1a and 1b,
Fig. 2b is a vertical cross-sectional view of the lens depicted in fig 2a,
Fig. 2c shows horizontal cross-sectional views of the lens depicted in fig. 2a,
Fig. 3a is a horizontal cross-sectional view of the lens depicted in fig 2a,
Fig. 3b shows vertical cross-sectional views of the lens depicted in fig 2a and
Fig. 4 depicts a schematic section view of one exemplary embodiment of a bicycle headlamp according to the invention showing the propagation of the light beams emitted by the light sources.

### Detailed description

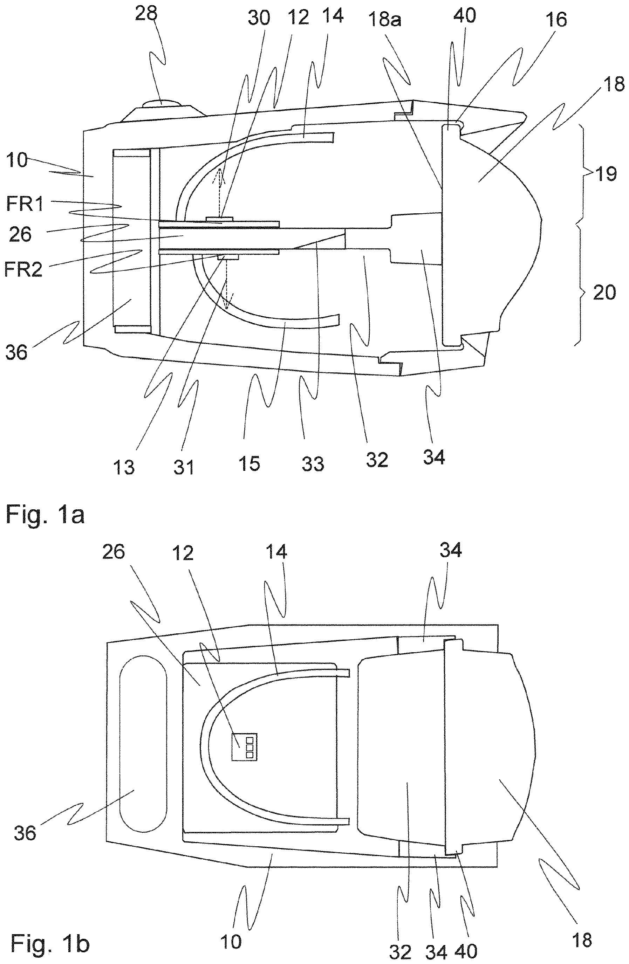

Figure 1a illustrates a vertical cross-section and fig 1b illustrates a lateral cross-section of one exemplary embodiment of a bicycle headlamp according to the invention. In the following both figures are explained simultaneously. The headlamp comprises a housing 10 and a first light source 12 disposed inside the housing. The first light source is a LED-element including three LED-chips in a row-like formation. The LED-element is secured to the first side of a plate-like carrier 26, which lies inside the housing. The first light source has a first main radiation direction 30, which is perpendicular to the level of the first side of the carrier. The headlamp further comprises a second light source 13 secured to the second side of the carrier 26. The first and second light sources are similar LED-elements. The second light source has a second main radiation direction 31, which is perpendicular to the second side of the carrier plate. Thus, the main radiation directions of the first and second light sources are parallel and point to opposite directions from the carrier 26. Naturally, both light sources emit light beams to all directions towards a hemispherical space surrounding the light source.

Inside the housing 10, on the first side of the carrier 26, there is a first reflector 14 and on the second side of the carrier there is a second reflector 15. The reflectors are shaped elements having a light reflecting covering on the surface facing the light source. The housing has a front opening 16 into which a lens 18 is installed. On the outer surface of the housing there may be a bracket for securing the head lamp to the bicycle. The head lamp may be attached for example to the handlebar of a bicycle or to the frame of the bicycle.

The lens 18 has a substantially flat first surface 18a facing the inner space of the housing and an opposite second surface. The lens is placed onto the front opening 16 of the housing to cover the opening. In the edge of the lens there is a flange 40, which is clamped between a collar on the edge of the front opening 16 and two holders 34 inside the housing 10. Seen from the front of the headlamp, the lens has a vertical direction and a lateral direction. The vertical direction is substantially parallel with the main radiation directions 30, 31 of the first and second light sources 12, 13. The lateral direction is perpendicular to the vertical direction. The lens can be made of transparent plastic or glass.

The first and second reflectors and the lens are optical elements, which direct the light beams emitted by the first and second light sources through the lens out of the housing. The first reflector 14 is placed inside the housing to cover at least part of the inner surface of the housing on the first side on the carrier 26. Similarly, the second reflector 15 is placed inside the housing to cover at least part of the inner surface of the housing on the second side on the carrier 26. The reflectors can be made of plastic or metal.

The first reflector is shaped to have a first reflecting focal point FR1 and the second reflector is shaped to have second reflecting focal point FR2. Preferably, at least a portion of the first reflector 14 and of the second reflector 15 has a shape of a partial spheroid or paraboloid. The first light source 12 is positioned substantially in the first reflecting focal point FR1 and the second light source 13 is positioned substantially in the second reflecting focal point FR2 correspondingly. The distance between the first light source 12 and the first surface 18a of the lens 18 is bigger than the distance between the second light source 13 and the first surface of the lens, i.e. the second light source is closer to the lens than the first light source. Also, the second reflector is slightly closer to the lens than the first reflector. By arranging the light sources slightly offset on opposite sides of the carrier heat produced by the light sources can be more evenly distributed to the carrier.

Inside the housing there is a battery space 36 for receiving batteries acting as a power source for the light sources. The power supply from the batteries to the first and second light sources is controlled with a switch 28. The battery space has contacts, which are coupled to the switch and light sources with conductors not shown in the figures.

The lens comprises an upper part 19 and a lower part 20. The first reflector 14 is arranged inside the housing 10 to reflect the first light beams emitted by the first light source through the lower part 20 of the lens 18. Correspondingly the second reflector 15 is arranged inside the housing to reflect the second light beams emitted by the second light source through the upper part 19 of the lens 18. Between the front edge on the carrier and the first surface of the lens there is an opening 32 through which the reflected first and second light beams can cross the level defined by the carrier. The front edge of the carrier plate has a wedge-shaped edge portion 33 to ensure, that the front edge of the carrier plate does not hinder the propagation of the second light beams towards the upper part of the lens.

Light beams passing through the lower part of the lens form a low beam for illuminating the near-distance regions and middle-distance regions of the ground surface in front of the bicycle. Light beams passing through the upper part of the lens form a high beam for illuminating the far-distance regions in front of the bicycle.

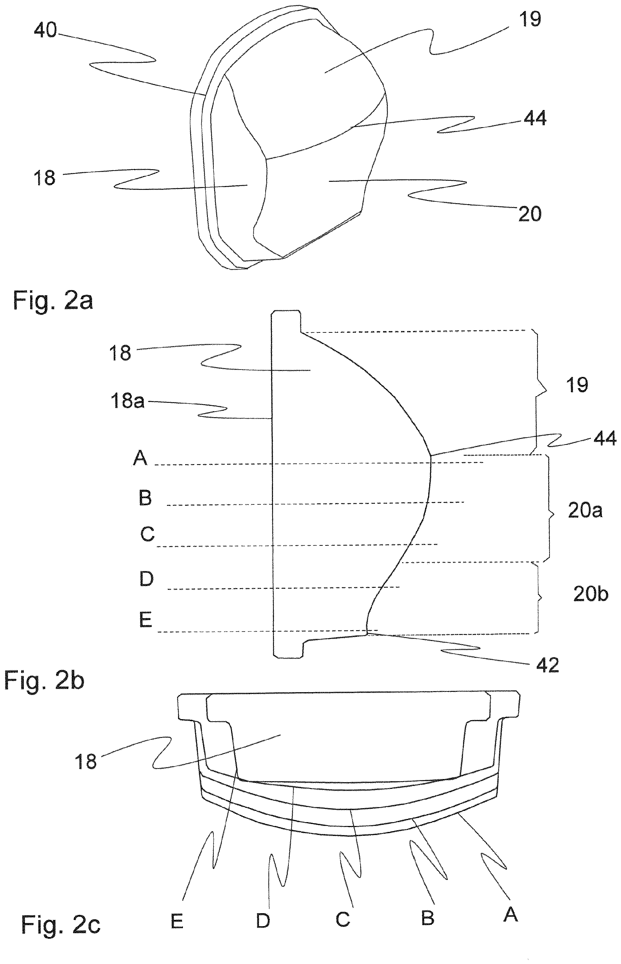

Figure 2a illustrates the lens 18 of the embodiment of a bicycle headlamp depicted in figs 1a and 1b. The lens comprises an upper part 19 and a lower part 20. The upper part and the lower part of the lens are thicker areas of the lens, through which light beams emitted by the light sources are directed to travel. On the edge of the lens there is a thinner surrounding flange 40, which is clamped between the collar on the edge of the front opening 16 and holders 32 inside the housing 10, when the lens is secured to the housing. The first surface of the lens is substantially even, and the second surface of the upper part is outwards curved, i.e. the upper part has convex second surface. The second surface of the lower part has two differently shaped portions; an upper portion 20a, bordering to the upper part 19, and a lower portion 20b between the upper portion and the lower edge 42 of the lens (fig. 2b). Between the upper part 19 and the lower part 20 there is a boundary line 44, in which the curvature of the outer surface of the lens chances sharply, i.e. there is a noticeable chance in the curvature of the second surface. Between the upper portion 20a and the lower portion 20b there is no clear boundary line, but the curvature of the second surface chances gradually and smoothly from outwards curved shape to an inwards curved shape.

Figure 2b illustrates a vertical cross-sectional view of the lens depicted in fig 2a. The vertical cross-sectional view depicts the middle section of the lens, i.e. the cross-section "cuts" the lens into two equal halfs in vertical direction of the lens. Fig. 2c shows later cross-sectional views A, B, C, D, E of the lens depicted in figs 2a and 2b. These lateral cross-sections are presented on same figure by placing the lines depicting the first surfaces 18a of the lens 18 superimposed. The cross sectional views depict the sections of the lower part 20 of the lens 18 at different distances from the boundary line 44; the three highest sectional views A, B, C presenting the sections in the upper portion 20a and the two lowest sectional views D, E presenting the sections in the lower portion 20b.

As shown in the lateral cross section views, in the lateral direction of the lens 18, the second surface of the upper portion 20a and lower portion 20b are both outwards curved. However, the radius of the lateral curvature of the second surface in the upper portion 20a is smaller than the radius of lateral curvature of the second surface in the lower portion 20b. Further, the radius of lateral curvature is smallest at the boundary line 44 and biggest at the lower edge 42 of the lens. At the lower edge of the lens the second surface is almost straight seen in the lateral direction. Between the boundary line and the lower edge, the radius of lateral curvature changes gradually and smoothly.

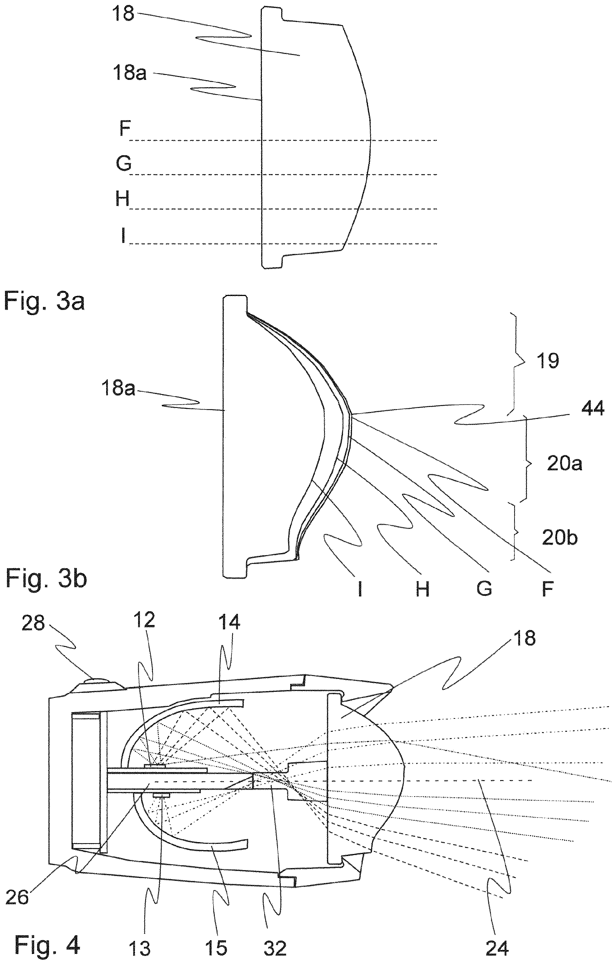

Figure 3a illustrates a lateral cross-sectional view of the lens depicted in fig. 2a along the boundary line 44 of the lens. Fig. 3b shows vertical cross-sectional views F, G, H, I of the lens depicted in fig. 2a. These vertical cross-sections are presented on same figure by placing the lines depicting the first surfaces 18a of the lens 18 superimposed. The cross-sectional views depict the sections of the lens 18 at different distances from the vertical center line of the lens.

As shown in the vertical cross section views, in the vertical direction of the lens 18, the whole second surface area of the upper part 19 is outwards curved, but the second surface of the lower part 20 has two differently shaped portions. The second surface of the upper portion 20a of the lower part is outwards curved and the lower portion 20b of the lower part 20 is inwards curved in the vertical direction of the lens.

Fig.4 is a schematic section view of the bicycle headlamp shown in Figs. 1a and 1b. When the first light source 12 is turned on, it emits light beams towards the first reflector 14, which reflects the light beams towards the lens 18. The first reflector is shaped to direct reflected light beams through the opening 32 between the lens 18 and the front edge of the carrier 26 so that they pass through the lower part of the lens 18. Light beams reflected from the reflecting area close to the first light sources are here called first reflected light beams and they are depicted with dotted lines in Fig 4. The first reflected light beams pass through the upper portion 20a of the lower part 20 of the lens (fig. 3b) and propagate forwards to a direction, which is substantially parallel with the optical axis 24 or deflected slightly downwards from the optical axis 24. The optical axis lies in the fictional plane defined by the carrier 26. These first reflected light beams form a front part of the light pattern for illuminating the middle-distance regions of the ground surface in front of the bicycle. The first reflected light beams are substantially parallel, collimated light beams creating a clear cut-off-line in the front part of the light pattern created by the first light source.

Light beams reflected from the reflecting area of the first reflector 14 close to free edge of the first reflector 14 are here called second reflected light beams and they are depicted with dashed lines in Fig 4. The second reflected light beams pass through the lower portion 20b of the lower part 20 of the lens 18 (fig. 3b) and propagate forwards, but they deflect more steeply downwards from the optical axis 24. The angle between the second reflected light beams and the optical axis 24 may be up to 45 degrees. The second reflected light beams are directed to the rear part of the light pattern created by the first light source for illuminating the near-distance regions of the ground surface in front of the bicycle.

A small part of the light beams emitted by the first light sources 12 do not reflect from the first reflector 14, but they propagate directly from the light sources to the lens 18 and pass through the upper part 19 of the lens 18. These light beams are here called direct light beams and they are depicted with dash-and-two dot-lines in fig. 4. The lens deflects the direct light beams downwards creating an angle with the direction of the optical axis 24. The direct light beams reach the ground level behind the cut-off-line of the light pattern created by the first reflected light beams.

The first reflected light beams and the second reflected light beams and the direct light beams together form a low beam for illuminating the near-distance and middle-distance-regions of the ground surface in front of the bicycle. However, the second reflected light beams are directed to rear part of the low beam light pattern, i.e. the part of the pattern illuminating the neat-distance regions of the ground surface in immediate vicinity the bicycle. The first reflected light beams on the other hand are directed to the front part of the low beam light pattern. This part of the light pattern illuminates the middle-distance regions of the ground surface in front the bicycle. Due to the changing lateral curvature of the lower part 20 of the lens, the light pattern created by the second reflected light beams is wide in the sideways direction, i.e. low beam light pattern illuminates well also the side areas in front of the bicycle. The low beam light pattern has a clear cut-off-line above which practically no light beams are directed. Therefore, the low beam light pattern does not glare oncoming traffic.

When the second light source 13 is turned on, it emits second light beams towards the second reflector 15, which reflects the light beams towards the lens 18. The second reflector is shaped to direct reflected light beams through the opening 32 between the lens 18 and the front edge of the carrier 26 so that they pass through the upper part 19 of the lens 18. Light beams emitted by the second light source and reflected from the second reflector are here called third reflected light beams and they are depicted with dash-and-dot-lines in Fig 4. The third reflected light beams pass through the upper part of the lens and propagate forwards to a direction, which is substantially parallel with the optical axis 24 or deflected slightly upwards from the optical axis 24. The third reflected light beams form a high beam for illuminating the far-distance regions in front of the bicycle. Most of the third reflected light beams are directed above the cut-off-line of the low beam, i.e. the high beam light pattern is formed further ahead of the cut-off-line of the low beam.

The first and second light sources can be turned on or off by using the switch 28. Best illumination is achieved, when both first and second light sources 12, 13 are turned on, whereby the low beam light pattern illuminates the short-distance regions and the middle-distance regions of the ground surface in front the bicycle and the high beam light pattern illuminates the far-distance regions in front the bicycle. In traffic situations, where the high beam light patter may disturb the oncoming traffic, the second light sources can be turned off.

Above, some preferred embodiments of the invention are explained. The invention is not limited to the solutions described above, but the inventive idea can be applied in numerous ways within the scope of the claims.

**Reference signs:**
- 10: housing
- 12: first light source
- 13: second light source
- 14: first reflector
- 15: second reflector
- 16: front opening
- 18: lens
- 18a: first surface
- 19: upper part
- 20: lower part
- 20a: upper portion
- 20b: lower portion
- 24: optical axis
- 26: carrier
- 28: switch
- 30: first main radiation direction
- 31: second main radiation direction
- 32: opening
- 33: edge portion
- 34: holder
- 36: battery space
- 40: flange
- 42: lower edge
- 44: boundary line
- FR1: first reflection focal point
- FR2: second reflecting focal point

## Claims

1. A bicycle headlamp, comprising a housing (10) having a front opening (16), a lens (18) covering the front opening (16), said lens (18) having a vertical direction, a lateral direction, a first surface (18a) facing inside the housing (10) and an opposite second surface, a first light source (12) for emitting first light beams and a first reflector (14) for reflecting said first light beams towards said lens (18), **characterized in that,** the lens (18) has an upper part (19) and a lower part (20), the second surface of the upper part (19) is outwards curved and the second surface of the lower part (20) has an outwards curved upper portion (20a) and an inwards curved lower portion (20b) seen in the vertical direction of the lens (18).

2. A bicycle headlamp according to claim 1, **characterized in that**, the second surface of the upper portion (20a) and the lower portion (20b) of the lower part (20) of the lens (18) is outwards curved in the lateral direction of the lens (18) and the radius of lateral curvature of the second surface in the upper portion (20a) is smaller than the radius of lateral curvature of the second surface in the lower portion (20b) of the lens (18).

3. A bicycle headlamp according to claim 1 or 2, **characterized in that** said first light source (12) has a first main radiation direction (30), which is substantially parallel with the vertical direction of the lens (18).

4. A bicycle headlamp according to any of the claims 1 to 3, **characterized in that** said first reflector (14) is arranged to reflect said first light beams through said lower part (20) of the lens (18).

5. A bicycle headlamp according to any of the claims 1 to 4, **characterized in that** the first surface (18a) of the lens (18) is flat.

6. A bicycle headlamp according to any of the claims 1 to 5, **characterized in that** said first reflector (14) has a first reflecting focal point (FR1) and the first light source (12) is positioned substantially in the first reflecting focal point (FR1).

7. A bicycle headlamp according to any of the claims 1 to 6, **characterized in that**, it further comprises a second light source (13) for emitting second light beams and a second reflector (15) for reflecting said second light beams towards said lens (18).

8. A bicycle headlamp according to claim 7, **characterized in that** said second light source (13) has a second main radiation direction (31) and the first main radiation direction (30) of the first light source (12) and the second main radiation direction (31) point to opposite directions.

9. A bicycle headlamp according to claim 7 or 8, **characterized in that** said second reflector (15) is arranged to reflect said second light beams through said upper part (19) of the lens (18).

10. A bicycle headlamp according to any of the claims 7 to 9, **characterized in that** said second reflector (15) has a second reflecting focal point (FR2) and the second light source (13) is positioned substantially in the second reflecting focal point (FR2).

11. A bicycle headlamp according to claim 10, **characterized in that** at least a portion of the first reflector (14) and/or of the second reflector (15) has a shape of a partial spheroid or paraboloid.

12. A bicycle headlamp according to any of the claims 7 to 11, **characterized in that**, it further comprises a carrier (26) for supporting the first and second light sources (12, 13), the first light source (12) and the first reflector (14) being on the first side of the carrier (26) and the second light source (13) and the second reflector (15) being on the second side of the carrier (26).

13. A bicycle headlamp according to claim 12, **characterized in that**, the distance between the first light source (12) and the first surface (18a) of the lens (18) is bigger than the distance between the second light source (13) and the first surface (18a) of the lens (18).

14. A bicycle headlamp according to any of the claims 7 to 13, **characterized in that**, it further a comprises a switch (28) for opening and closing the power supply to the first light source (12) and to the second light source (13).

## Patentansprüche

1. Fahrradscheinwerfer, umfassend ein Gehäuse (10) mit einer Frontöffnung (16), eine die Frontöffnung (16) abdeckende Linse (18), wobei die Linse (18) eine vertikale Richtung, eine seitliche Richtung, eine erste Oberfläche (18a), die in das Gehäuse (10) weist, und eine gegenüberliegende zweite Oberfläche aufweist, eine erste Lichtquelle (12) zum Emittieren erster Lichtstrahlen und einen ersten Reflektor (14) zum Reflektieren der ersten Lichtstrahlen zu der Linse (18), **dadurch gekennzeichnet, dass** die Linse (18) einen oberen Teil (19) und einen unteren Teil (20) aufweist, gesehen in der vertikalen Richtung der Linse (18), die zweite Oberfläche des oberen Teils (19) nach außen gekrümmt ist und die zweite Oberfläche des unteren Teils (20) einen nach außen gekrümmten oberen Abschnitt (20a) und einen nach innen gekrümmten unteren Abschnitt (20b) aufweist.

2. Fahrradscheinwerfer nach Anspruch 1, **dadurch gekennzeichnet, dass** die zweite Oberfläche des oberen Abschnitts (20a) und des unteren Abschnitts (20b) des unteren Teils (20) der Linse (18) in seitlicher Richtung der Linse (18) nach außen gekrümmt ist und der seitliche Krümmungsradius der zweiten Oberfläche im oberen Abschnitt (20a) kleiner ist als der seitliche Krümmungsradius der zweiten Oberfläche im unteren Abschnitt (20b) der Linse (18).

3. Fahrradscheinwerfer nach Anspruch 1 oder 2, **dadurch gekennzeichnet, dass** die erste Lichtquelle (12) eine erste Hauptabstrahlrichtung (30) aufweist, die im Wesentlichen parallel zur vertikalen Richtung der Linse (18) ist.

4. Fahrradscheinwerfer nach einem der Ansprüche 1 bis 3, **dadurch gekennzeichnet, dass** der erste Reflektor (14) so angeordnet ist, dass er die ersten Lichtstrahlen durch den unteren Teil (20) der Linse (18) reflektiert.

5. Fahrradscheinwerfer nach einem der Ansprüche 1 bis 4, **dadurch gekennzeichnet, dass** die erste Oberfläche (18a) der Linse (18) flach ist.

6. Fahrradscheinwerfer nach einem der Ansprüche 1 bis 5, **dadurch gekennzeichnet, dass** der erste Reflektor (14) einen ersten reflektierenden Brennpunkt (FR1) aufweist und die erste Lichtquelle (12) im Wesentlichen in dem ersten reflektierenden Brennpunkt (FR1) positioniert ist.

7. Fahrradscheinwerfer nach einem der Ansprüche 1 bis 6, **dadurch gekennzeichnet, dass** er ferner eine zweite Lichtquelle (13) zum Emittieren zweiter Lichtstrahlen und einen zweiten Reflektor (15) zum Reflektieren der zweiten Lichtstrahlen zu der Linse (18) umfasst.

8. Fahrradscheinwerfer nach Anspruch 7, **dadurch gekennzeichnet, dass** die zweite Lichtquelle (13) eine zweite Hauptabstrahlrichtung (31) aufweist und die erste Hauptabstrahlrichtung (30) der ersten Lichtquelle (12) und die zweite Hauptabstrahlrichtung (31) in entgegengesetzte Richtungen weisen.

9. Fahrradscheinwerfer nach Anspruch 7 oder 8, **dadurch gekennzeichnet, dass** der zweite Reflektor (15) so angeordnet ist, dass er die zweiten Lichtstrahlen durch den oberen Teil (19) der Linse (18) reflektiert.

10. Fahrradscheinwerfer nach einem der Ansprüche 7 bis 9, **dadurch gekennzeichnet, dass** der zweite Reflektor (15) einen zweiten reflektierenden Brennpunkt (FR2) aufweist und die zweite Lichtquelle (13) im Wesentlichen in dem zweiten reflektierenden Brennpunkt (FR2) positioniert ist.

11. Fahrradscheinwerfer nach Anspruch 10, **dadurch gekennzeichnet, dass** zumindest ein Teil des ersten Reflektors (14) und/oder des zweiten Reflektors (15) die Form eines Teilsphäroids oder Paraboloids aufweist.

12. Fahrradscheinwerfer nach einem der Ansprüche 7 bis 11, **dadurch gekennzeichnet, dass** er ferner einen Träger (26) zum Tragen der ersten und zweiten Lichtquelle (12, 13) umfasst, wobei sich die erste Lichtquelle (12) und der erste Reflektor (14) auf der ersten Seite des Trägers (26) befinden und die zweite Lichtquelle (13) und der zweite Reflektor (15) sich auf der zweiten Seite des Trägers (26) befinden.

13. Fahrradscheinwerfer nach Anspruch 12, **dadurch gekennzeichnet, dass** der Abstand zwischen der ersten Lichtquelle (12) und der ersten Oberfläche (18a) der Linse (18) größer als der Abstand zwischen der zweiten Lichtquelle (13) und der ersten Oberfläche (18a) der Linse (18) ist.

14. Fahrradscheinwerfer nach einem der Ansprüche 7 bis 13, **dadurch gekennzeichnet, dass** er ferner einen Schalter (28) zum Öffnen und Schließen der Stromversorgung zur ersten Lichtquelle (12) und zur zweiten Lichtquelle (13) umfasst.

## Revendications

1. Phare de bicyclette, comprenant un boîtier (10) ayant une ouverture avant (16), une lentille (18) recouvrant l'ouverture avant (16), ladite lentille (18) ayant une direction verticale, une direction latérale, une première surface (18a) faisant face à l'intérieur du boîtier (10) et une seconde surface opposée, une première source lumineuse (12) pour émettre des premiers faisceaux lumineux et un premier réflecteur (14) pour réfléchir lesdits premiers faisceaux lumineux vers ladite lentille (18), **caractérisé en ce que** la lentille (18) a une partie supérieure (19) et une partie inférieure (20), la seconde surface de la partie supérieure (19) est courbée vers l'extérieur et la seconde surface de la partie inférieure (20) a une partie supérieure courbée vers l'extérieur (20a) et une partie inférieure courbée vers l'intérieur (20b) vue dans la direction verticale de la lentille (18) .

2. Phare de bicyclette selon la revendication 1, **caractérisé en ce que** la seconde surface de la partie supérieure (20a) et de la partie inférieure (20b) de la partie inférieure (20) de la lentille (18) est courbée vers l'extérieur dans la direction latérale de la lentille (18) et le rayon de courbure latérale de la seconde surface dans la partie supérieure (20a) est inférieur au rayon de courbure latérale de la seconde surface dans la partie inférieure (20b) de la lentille (18) .

3. Phare de bicyclette selon la revendication 1 ou 2, **caractérisé en ce que** ladite première source lumineuse (12) a une première direction de rayonnement principale (30), qui est sensiblement parallèle à la direction verticale de la lentille (18).

4. Phare de bicyclette selon l'une quelconque des revendications 1 à 3, **caractérisé en ce que** ledit premier réflecteur (14) est agencé pour réfléchir lesdits premiers faisceaux lumineux à travers ladite partie inférieure (20) de la lentille (18).

5. Phare de bicyclette selon l'une quelconque des revendications 1 à 4, **caractérisé en ce que** la première surface (18a) de la lentille (18) est plane.

6. Phare de bicyclette selon l'une quelconque des revendications 1 à 5, **caractérisé en ce que** ledit premier réflecteur (14) a un premier foyer de réflexion (FR1) et la première source lumineuse (12) est positionnée sensiblement dans le premier foyer de réflexion (FR1).

7. Phare de bicyclette selon l'une quelconque des revendications 1 à 6, **caractérisé en ce qu'**il comprend en outre une seconde source lumineuse (13) pour émettre des seconds faisceaux lumineux et un second réflecteur (15) pour réfléchir lesdits seconds faisceaux lumineux vers ladite lentille (18).

8. Phare de bicyclette selon la revendication 7, **caractérisé en ce que** ladite seconde source lumineuse (13) a une seconde direction de rayonnement principale (31) et la première direction de rayonnement principale (30) de la première source lumineuse (12) et la seconde direction de rayonnement principale (31) pointent vers des directions opposées.

9. Phare de bicyclette selon la revendication 7 ou 8, **caractérisé en ce que** ledit second réflecteur (15) est agencé pour réfléchir lesdits seconds faisceaux lumineux à travers ladite partie supérieure (19) de la lentille (18) .

10. Phare de bicyclette selon l'une quelconque des revendications 7 à 9, **caractérisé en ce que** ledit second réflecteur (15) a un second foyer de réflexion (FR2) et la seconde source lumineuse (13) est positionnée sensiblement dans le second foyer de réflexion (FR2).

11. Phare de bicyclette selon la revendication 10, **caractérisé en ce qu'**au moins une partie du premier réflecteur (14) et/ou du second réflecteur (15) a une forme de sphéroïde ou de paraboloïde partiel.

12. Phare de bicyclette selon l'une quelconque des revendications 7 à 11, **caractérisé en ce qu'**il comprend en outre un support (26) pour supporter les première et seconde sources lumineuses (12, 13), la première source lumineuse (12) et le premier réflecteur (14) étant sur le premier côté du support (26) et la seconde source lumineuse (13) et le second réflecteur (15) étant sur le second côté du support (26).

13. Phare de bicyclette selon la revendication 12, **caractérisé en ce que** la distance entre la première source lumineuse (12) et la première surface (18a) de la lentille (18) est supérieure à la distance entre la seconde source lumineuse (13) et la première surface (18a) de la lentille (18).

14. Phare de bicyclette selon l'une quelconque des revendications 7 à 13, **caractérisé en ce qu'**il comprend en outre un interrupteur (28) pour ouvrir et fermer l'alimentation électrique de la première source lumineuse (12) et de la seconde source lumineuse (13).
